# FASCICULE DE BREVET EUROPEEN

(11) **EP 4 109 158 B1**
(45) Date de publication et mention de la délivrance du brevet: **08.10.2025**
(21) Numéro de dépôt: 22181109.4
(22) Date de dépôt: 24.06.2022
(51) Int. Cl.: G02B 6/42, G02B 6/28, G02B 6/293, H04B 10/00

(54) **MODULE ÉMETTEUR-RÉCEPTEUR OPTRONIQUE**
OPTRONISCHES SENDE-/EMPFANGSMODUL
OPTOELECTRONIC TRANSMITTER-RECEIVER MODULE

(30) Priorité: 25.06.2021 FR 2106821
(43) Date de publication de la demande: 28.12.2022
(73) Titulaire: Orange, 92130 Issy-les-Moulineaux (FR)
(72) Inventeur: CHANCLOU, Philippe, 92326 CHATILLON (FR)
(74) Mandataire: Vidon Brevets & Stratégie

(56) Documents cités:
- EP-A2- 1 339 179
- US-A1- 2012 148 241
- US-A1- 2018 062 825
- US-A1- 2021 111 796

## Description

### Domaine technique

L'invention se situe dans le domaine des télécommunications par fibres optiques, et concerne plus particulièrement les modules émetteur-récepteur de signaux optiques dans un réseau optique passif (PON pour « Passive Optical Network » en anglais) comprenant un terminal de ligne optique, auquel sont connectés de tels modules émetteur-récepteur, et une pluralité de terminaux de réseau optique.

### Art antérieur

Les équipements appelés terminaux optiques de lignes (OLT pour « Optical Line terminal » en anglais) ont pour fonction de convertir des signaux électriques en des signaux optiques. Un tel équipement d'accès à la fibre (situé avant le ou les derniers kilomètres du réseau pour amener la fibre aux clients) est connecté à une infrastructure de fibre optique, composée au départ d'une fibre optique qui traverse des coupleurs optiques en puissance pour connecter une multitude de clients (typiquement soixante-quatre). Le module optronique du client est appelé terminal ou unité de réseau optique (ONU pour « Optical Network Unit » en anglais).

L'invention concerne plus particulièrement le module émetteur-récepteur optronique, noté également module émetteur-récepteur, qui est enfiché dans l'OLT. Ce module émetteur-récepteur optronique est composé d'une interface électronique comprenant des composants électroniques et d'une interface optique comprenant des composants optiques. Cette interface optique est notamment composée d'une source optique (laser) modulée avec les données descendantes (de l'OLT vers les ONUs) et d'un récepteur optique (photodiode) pour recevoir les données montantes (des ONUs vers l'OLT). Les deux signaux optiques, descendant et montant, sont bidirectionnels et se propagent dans la même fibre optique. Ces signaux optiques, descendant et montant, utilisent des longueurs d'onde différentes qui sont multiplexées/dé-multiplexées dans l'émetteur-récepteur optronique. Il existe aussi des modules émetteur-récepteur optroniques mettant en œuvre plusieurs technologies PON, c'est-à-dire permettant d'émettre des signaux descendants présentant eux-mêmes des longueurs d'onde différentes et de recevoir des signaux montants présentant eux-mêmes des longueurs d'onde différentes, pour des débits utiles différents.

Actuellement, les modules émetteur-récepteur optroniques présentent une interface optique composée d'une seule fibre optique.

Par ailleurs, on observe actuellement une augmentation du « budget optique » des modules émetteur-récepteur optroniques, c'est-à-dire que les modules émetteur-récepteur optroniques classiques supportant 28 (vingt-huit) dB de budget optique sont progressivement remplacés par des modules émetteur-récepteur optroniques pouvant supporter 32 (trente-deux) dB ou 35 (trente-cinq) dB de budget optique. L'usage de ce budget optique supplémentaire peut être alloué par exemple à de la portée supplémentaire, c'est-à-dire à l'utilisation de plus de longueur de fibre optique.

Cependant, le nombre de clients adressés par un module émetteur-récepteur optronique est limité et le nombre de ports sur un OLT, correspondant au nombre de modules émetteur-récepteur optroniques connectés, ne peut pas être augmenté sans limites. D'ailleurs, pour des raisons économiques, la tendance est plutôt à chercher à réduire le nombre de ports sur l'OLT.

Il existe donc un besoin pour une technique permettant d'optimiser le nombre de ports sur un OLT tout en n'impactant pas le budget optique alloué et en adressant un plus grand nombre de clients. Le document de brevet US2012148241 décrit un module émetteur-récepteur optronique comprenant une pluralité de coupleurs optiques permettant de diviser le signal optique en aval pour délivrer N signaux optiques couplés dans une fibre optique connectée à N ports optiques orientés vers l'ONU et combiner la puissance en amont provenant du réseau des N ports optiques et guider le signal en amont vers une photodiode à avalanche sous une forme utile pour les communications en amont.

### Exposé de l'invention

La présente technique répond à ce besoin en proposant un module émetteur-récepteur optronique selon la revendication 1.

Ainsi, la présente technique repose sur une solution nouvelle et inventive de la mise en œuvre d'un module émetteur-récepteur optronique connecté à un terminal de ligne optique dans un réseau optique passif, permettant d'adresser un plus grand nombre de terminaux clients sans dégrader ses performances et tout en maintenant un niveau de supervision optimal.

Pour ce faire, un module émetteur-récepteur selon la présente technique comprend notamment au moins un coupleur optique « principal », m vers n, permettant de séparer m signaux optiques générés par plusieurs lasers de l'interface optique en n signaux optiques, sensiblement de même puissance, pour leur transmission via n fibres optiques à destination de n groupes de terminaux clients de réseau optique. Ainsi, un seul module émetteur-récepteur optronique permet d'adresser n groupes de terminaux clients au lieu d'un groupe de terminaux clients, via une seule fibre optique, comme c'est le cas actuellement.

De plus, afin de préserver le niveau de supervision actuel (en termes de puissance optique), la présente technique prévoit d'associer à ce coupleur optique au moins une photodiode pour mesurer la puissance reçue via au moins une des fibres, avantageusement via chacune des n fibres et ainsi être capable de détecter par exemple une coupure d'une des fibres, voire de de détecter la distance à laquelle se trouve la coupure. Pour ce faire, la photodiode de mesure de puissance optique est associée à un coupleur optique « montant », qui prélève un pourcentage du signal optique reçu, pourcentage insignifiant pour le fonctionnement du module émetteur-récepteur mais suffisant pour mettre en œuvre une supervision.

Enfin, la présente technique tire avantageusement profit des augmentations considérables du budget optique supporté par un seul module émetteur-récepteur, et donc de l'augmentation du gain en puissance de réception ainsi que de la sensibilité accrue du récepteur, pour fournir des performances optimales en réception.

Selon un aspect particulier, le coupleur optique principal (*CO1*) est un coupleur 1 vers 2 et le module émetteur-récepteur optronique comprend également :
- un deuxième coupleur optique montant (*COM-B*) apte à séparer un signal optique montant (*M-B*) reçu via la deuxième fibre optique en deux signaux optiques séparés selon un rapport prédéterminé de puissance de référence pour les signaux optiques séparés, le deuxième coupleur optique montant délivrant un deuxième signal de puissance faible (*M-B-low*) et un deuxième signal de puissance forte (*M-B-high*),
- une deuxième photodiode de mesure de puissance (*PxB*) délivrant une mesure de puissance associée au deuxième signal de puissance faible (*M-B-low*),
et où le coupleur optique principal est apte à agréger le premier signal optique de forte puissance (*M-A-high*) et le deuxième signal optique de forte puissance (*M-B-high*), en un signal optique montant (*M-A-B*).

Ainsi, selon ce mode de réalisation particulier, le coupleur optique principal est un coupleur 1 vers 2, et permet donc, en voie descendante, de séparer le signal optique généré en deux signaux transmis chacun sur une fibre optique distincte, et en voie montante, d'assembler les deux signaux optiques respectivement reçus sur chacune des fibres optiques, en provenance des différents groupes de terminaux clients ainsi que de mesurer la puissance reçue sur chacune des deux fibres optiques. Ce mode de réalisation permet notamment de tirer parti d'une configuration existante des modules émetteur-récepteur qui présentent en effet deux interfaces fibre, pouvant être utilisées actuellement respectivement pour la réception et l'émission. Ici, on utilise chaque interface de manière bidirectionnelle, pour adresser deux fois plus de terminaux clients que les techniques actuelles, typiquement deux groupes de soixante-quatre terminaux clients, tout en supervisant de manière distincte les deux groupes de terminaux clients reliés via les deux fibres distinctes, grâce aux coupleurs optiques montants associés aux photodiodes de mesure de puissance pour chacune des fibres.

Selon une caractéristique particulière, le module émetteur-récepteur comprend deux lasers générant respectivement un premier signal optique présentant une première longueur d'onde (*λ1D*) pour un premier débit utile et un deuxième signal optique présentant une deuxième longueur d'onde (*λ2D*) pour un deuxième débit utile et le coupleur optique principal (*CO1*) est apte :
- à séparer un signal optique correspondant à une combinaison des premier et deuxième signaux optiques générés par les deux lasers en n signaux optiques descendants sensiblement de même puissance à transmettre respectivement dans n fibres optiques, et
- à agréger n premiers et/ou deuxièmes signaux optiques de forte puissance correspondant chacun à une combinaison de deux signaux optiques reçus présentant respectivement une première (*λ1m*) et une deuxième longueur d'onde (*λ2m),* en un signal optique montant présentant une première (*λ1m)* et une deuxième longueur d'onde (*λ2m),*
et le module émetteur-récepteur optronique comprend au moins un premier module de filtrage optique montant (*MFM-A*) délivrant une mesure de puissance associée à chaque signal optique de puissance faible pour chaque première (*λ1m*) et deuxième longueur d'onde (*λ2m).*

Ainsi, ce mode de réalisation particulier permet la mise en œuvre de la présente technique dans un contexte dit multi-PON, c'est-à-dire permettant de supporter différentes technologies PON, et notamment différentes longueurs d'onde pour différents débits utiles (typiquement 1 Gigabit et 10 Gigabits). Pour ce faire, le module émetteur-récepteur optronique comprend deux lasers permettant de générer des signaux à différentes longueurs d'onde, et les éléments de la présente technique sont aptes à fonctionner de la même manière que lorsqu'il n'y a qu'un signal généré par un laser à une longueur d'onde.

De plus, ce mode de réalisation particulier permet également une supervision différenciée par longueur d'onde. De cette manière, il est possible d'affiner la supervision selon la technique utilisée, qui dépend de la longueur d'onde. Pour ce faire, un module de filtrage est prévu pour pouvoir mesurer la puissance associée à chaque longueur d'onde. Plusieurs mises en œuvre sont possibles pour ce module de filtrage.

Par exemple, le premier module de filtrage montant (*MFM-A*) comprend :
- un coupleur optique apte à séparer le signal optique de puissance faible présentant une première (*λ1m*) et une deuxième longueur d'onde (*λ2m)* délivré par le premier coupleur optique montant (*COM-A*) en deux signaux sensiblement de même puissance présentant chacun une première (*λ1m*) et une deuxième longueur d'onde (*λ2m),*
- deux filtres optiques (*FAλ1, FAλ2*) délivrant, à partir respectivement des deux signaux sensiblement de même puissance présentant chacun une première (*λ1m*) et une deuxième longueur d'onde (*λ2m*)*,* respectivement un premier signal à mesurer présentant la première longueur d'onde et un deuxième signal à mesurer présentant la deuxième longueur d'onde, et
- deux photodiodes (*PxA,λ1, PxA,λ2*) délivrant respectivement une mesure de puissance associée au premier signal à mesurer et au deuxième signal à mesurer délivrés par les filtres optiques. Selon une première variante, le module de filtrage mis en œuvre pour la supervision de puissance différenciée par longueur d'onde comprend d'abord un coupleur permettant de séparer en deux signaux de puissance sensiblement égale le signal reçu (comprenant les deux longueurs d'onde) et un filtre optique, pour chaque signal séparé, pour filtrer respectivement l'une et l'autre longueur d'onde. Ensuite, une photodiode de mesure de puissance est mise en œuvre après chaque filtre, pour mesurer la puissance du signal avec une seule longueur d'onde. Le filtre optique peut être intégré dans la photodiode, par exemple via un traitement optique sur la face de la photodiode de manière à la rendre sensible à une seule longueur d'onde.

Cette première variante est simple à mettre en œuvre et peu coûteuse du fait des éléments optiques utilisés.

Selon un autre exemple, le premier module de filtrage montant (*MFM-A*) comprend :
- un multiplexeur optique apte à séparer le signal optique de puissance faible présentant une première (*λ1m*) et une deuxième longueur d'onde (*λ2m*) délivré par le premier coupleur optique montant en un premier signal à mesurer présentant la première longueur d'onde et un deuxième signal à mesurer présentant la deuxième longueur d'onde, et
- deux photodiodes délivrant respectivement une mesure de puissance associée au premier signal à mesurer et au deuxième signal à mesurer délivrés par les filtres optiques.

Selon une deuxième variante, le module de filtrage mis en œuvre pour la supervision de puissance différenciée par longueur d'onde comprend un multiplexeur optique permettant de filtrer respectivement l'une et l'autre longueur d'onde et donc de délivrer deux signaux avec une seule longueur d'onde. Ensuite, une photodiode de mesure de puissance est mise en œuvre pour mesurer la puissance de chaque signal avec une seule longueur d'onde.

Cette deuxième variante présente des performances optimales en termes de perte optique, du fait de l'utilisation d'un multiplexeur à la place de l'association coupleur/filtre de la première variante ci-dessus.

Selon un aspect particulier, le module émetteur-récepteur optronique comprend un deuxième module de filtrage optique montant (*MFM-B*) délivrant une mesure de puissance associée à chaque signal optique de puissance faible pour chaque première (*λ1m*) et deuxième longueur d'onde (*λ2m*).

Selon une caractéristique particulière, le coupleur optique principal (*CO1*) est un coupleur 2 vers 2 présentant une première entrée-sortie pour l'émission et la réception des signaux optiques de la première fibre, une deuxième entrée-sortie pour l'émission et la réception des signaux optiques de la deuxième fibre, une troisième entrée-sortie pour l'obtention dudit au moins un signal optique descendant (*D*) généré par le laser et la délivrance du signal optique montant agrégé (*MA-B*) et une quatrième entrée-sortie connectée à une entrée-sortie externe de supervision (*S*) du module émetteur-récepteur optronique.

Selon ce mode de réalisation, le module émetteur-récepteur présente, en plus de chacune des deux entrées-sorties pour la première et la deuxième fibre, une troisième entrée-sortie de supervision, connectée au coupleur optique principal. Cette troisième entrée-sortie permet ainsi d'une part de superviser le signal montant des deux fibres, reçu et agrégé par le coupleur optique principal, et d'autre part de permettre la mise en œuvre d'une technique de réflectométrie par envoi d'une impulsion via le coupleur optique principal et observation de l'écho reçu en retour (toujours le coupleur optique principal) sans avoir besoin de déconnecter la ou les fibres.

Selon un aspect particulier, le coupleur optique principal (*CO1*), ledit au moins un premier coupleur optique montant (*COM-A*) et ladite au moins une première photodiode de mesure de puissance (*PxA*) sont agencés dans ledit module émetteur-récepteur de sorte à respecter les contraintes prédéterminées de dimensions d'un boitier mécanique dudit module émetteur-récepteur.

Ainsi, selon la technique proposée, les éléments optiques ajoutés dans le module émetteur-récepteur sont agencés de sorte à s'intégrer dans le boitier mécanique standard, i.e. en respectant des contraintes de dimension elles-mêmes imposées par les limitations d'espace des terminaux optiques de lignes (OLT) auxquels sont connectés les modules émetteur-récepteur.

Pour ce faire, plusieurs variantes d'implantation sont envisageables, à l'intérieur d'un module émetteur-récepteur, en tenant compte cependant des contraintes de fonctionnement propres au module émetteur-récepteur, notamment en termes d'efficacité optique en émission et en réception et de perturbations mutuelles des différents éléments optiques. Par exemple, de tels boitiers standard, de type LPC, présentent des interfaces optiques espacées de 6,25 millimètres, et font notamment partie des familles de normes SFP (pour « Small Formfactor Pluggable » en anglais), SFP+ ou XFP.

Selon une caractéristique particulière, au moins une mesure de puissance délivrée par au moins une photodiode de mesure de puissance est transmise au terminal de ligne optique dans un paramètre de diagnostic.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] présente un schéma d'un module émetteur-récepteur selon un premier mode de réalisation de la technique proposée ;
[Fig 2a] présente un schéma d'un module émetteur-récepteur selon un deuxième mode de réalisation de la technique proposée ;
[Fig 2b] présente un schéma d'un module émetteur-récepteur selon une première variante du deuxième mode de réalisation de la technique proposée ;
[Fig 2c] présente un schéma d'un module émetteur-récepteur selon une deuxième variante du deuxième mode de réalisation de la technique proposée ;
[Fig 3] présente un schéma d'un module émetteur-récepteur selon un troisième mode de réalisation de la technique proposée ;
[Fig 4] illustre un exemple de boitier mécanique d'un module émetteur-récepteur standard ;
[Fig 5] illustre un exemple d'assemblage optique, selon l'art antérieur ;
[Fig 6a] à [Fig 6f] illustrent des exemples d'agencement des composants dans un module émetteur-récepteur optronique selon différentes variantes de la technique proposée.

### Description détaillée de modes de réalisation de l'invention

Le principe général de la présente technique repose sur la mise en œuvre, dans un même module émetteur-récepteur, d'au moins deux interfaces optiques bidirectionnelles, i.e. avec une longueur d'onde montante et descendante dans chacune des voies, de sorte à pouvoir adresser au moins deux groupes de clients par le même port de l'équipement réseau OLT.

Pour ce faire, des éléments optiques supplémentaires sont ajoutés à l'intérieur d'un module émetteur-récepteur standard, sans nécessiter de modifications externes au module émetteur-récepteur, en tirant parti de la présence de plusieurs sorties fibre prévues sur un tel module émetteur-récepteur.

Il est connu de pouvoir adresser deux groupes de clients (par exemple deux groupes de soixante-quatre clients) à partir d'un même port OLT en ajoutant, entre un module émetteur-récepteur et deux infrastructures « 1 vers 64 » (permettant d'adresser les soixante-quatre clients à partir de la sortie fibre du module émetteur-récepteur), un coupleur optique de type « 1 vers 2 ». Avec une telle mise en œuvre, il est donc possible d'adresser cent-vingt-huit clients (2*64). Cependant, la localisation du coupleur optique « 1 vers 2 » au niveau de l'OLT, bien que ne nécessitant pas de modification de l'infrastructure extérieure dans l'urbanisme, pose plusieurs problèmes :
- il est nécessaire d'avoir une zone technique pour inclure ces éléments passifs que sont les coupleurs optiques « 1 vers 2 » avec le brassage en fibre optique associé,
- il n'est pas possible de savoir si l'une des deux voies en sortie du coupleur optique « 1 vers 2 » est connectée ou non à des équipements clients de type ONUs qui sont actifs, or cette information peut s'avérer indispensable lors d'intervention sur le brassage des fibres.

Les inventeurs ont donc cherché à pallier ces inconvénients tout en maintenant un niveau de performance optique optimal et un niveau de supervision optimal et sans modifier le boitier d'un module émetteur-récepteur standard.

Pour ce faire, la présente technique prévoit d'inclure au moins un coupleur 1 vers 2 (génériquement m vers n, avec m allant de 1 à n) dans l'interface optique du module émetteur-récepteur, allant ainsi à l'encontre de certaines réticences à inclure des éléments passifs dans un module optique actif, de manière à fournir deux interfaces optiques bidirectionnelles en utilisant les deux connecteurs fibres d'un module émetteur-récepteur connu.

De plus, un prélèvement de la puissance optique du signal montant (des équipements clients ONUs vers l'OLT) dans au moins une des deux voies est également ajouté, de manière à mesurer cette puissance optique, par exemple avec une photodiode de type puissance mètre.

Cette mesure de puissance optique (dans l'une et/ou l'autre des deux voies) peut être ajoutée dans une liste de paramètres de diagnostic échangée entre le module émetteur-récepteur et l'équipement OLT. En effet, les modules émetteur-récepteur supportent des fonctions de diagnostic (par exemple " Digital Optical Monitoring " ou DOM en anglais) conformément aux standards de l'industrie. Le contrôleur de suivi de diagnostic est disponible via un bus I2C (pour « Inter-Integrated Circuit » en anglais). Une telle fonctionnalité de "Digital Optical Monitoring" permet notamment à l'équipement OLT de relever en temps réel des paramètres, comme la puissance optique de sortie, la puissance optique d'entrée, la température et la tension d'alimentation du module émetteur-récepteur. En effet, il existe un canal d'échange permettant d'échanger des données de gestion du module émetteur-récepteur, par exemple pour les informations de la fonctionnalité de "Digital Optical Monitoring" (DOM), en parallèle du canal qui transmet les données de type Ethernet par exemple. Le diagnostic peut être effectué dans l'OLT. Il est aussi envisageable que l'OLT agisse en relais vers un autre équipement tel qu'un serveur qui hébergerait le diagnostic. La présente technique permet d'y ajouter la mesure de la puissance optique par voie montante, offrant ainsi une supervision différenciée par voie montante de sorte à fournir une précision de supervision optimale, adaptée à la configuration de la présente technique fournissant deux entrées-sorties fibre pour un même module émetteur-récepteur.

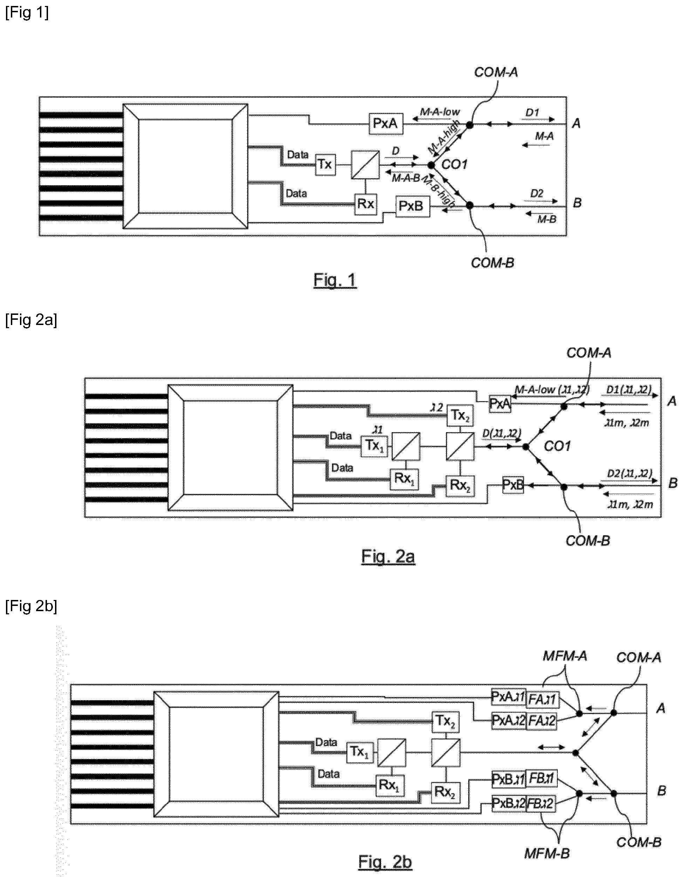

La figure 1 illustre donc ce principe général, pour une configuration de coupleur 1 vers 2 (donc avec m = 1 et n = 2), par un schéma des principaux composants d'un module émetteur-récepteur optronique apte à émettre au moins un signal optique descendant *D* respectivement dans au moins une fibre optique et à recevoir au moins un signal optique montant *M-A* via ladite au moins une fibre optique *A.* Pour ce faire, le module émetteur-récepteur comprend une interface optique comprenant au moins un laser apte à générer au moins le signal optique descendant *D.* Selon ce premier mode de réalisation, le module émetteur-récepteur comprend également :
- au moins un coupleur optique m vers n (ici illustré 1 vers 2), dit coupleur optique principal *CO1,* apte à séparer le signal optique descendant *D* généré par le laser en n (deux) signaux optiques descendants (*D1, D2 ..., Dn*) sensiblement de même puissance à transmettre respectivement dans n (deux) fibres optiques,
- au moins un premier coupleur optique montant *COM-A* apte à séparer au moins le signal optique montant *M-A* reçu via une première fibre optique *A* en deux signaux optiques séparés selon un rapport prédéterminé de puissance de référence (par exemple 1/99) pour les signaux optiques séparés résultant, de sorte à délivrer un premier signal de puissance faible *M-A-low* (par exemple correspondant à 1/100^{ème} du signal optique montant *M-A* reçu) et un premier signal de puissance forte *M-A-high* (par exemple correspondant à 99/100^{ème} du signal optique montant *MA* reçu),
- au moins une première photodiode de mesure de puissance *PxA* délivrant une mesure de puissance associée au premier signal de puissance faible *M-A-low.*

Par ailleurs, le coupleur optique principal *CO1* est également apte à agréger le premier signal optique de forte puissance *M-A-high* et au moins un deuxième signal optique montant représentatif d'un deuxième signal optique *M-B* reçu via une deuxième fibre optique B, en un signal optique montant agrégé *M-A-B.* Ce deuxième signal optique montant représentatif du deuxième signal optique *M-B* reçu via la deuxième fibre optique *B* correspond par exemple directement au signal montant *M-B* ou à un deuxième signal de puissance forte *M-B-high* (par exemple correspondant à 99/100^{ème} du signal optique montant *M-B* reçu de la deuxième fibre *B*) si un deuxième coupleur optique montant *COM-B* (de type 1/99) est également mis en œuvre, comme illustré sur la figure 1. Il est à noter que, dans cet exemple illustré en figure 1, il est également prévu une deuxième photodiode de mesure de puissance *PxB* délivrant une mesure de puissance associée au premier signal de puissance faible *M-B-low* délivré par ce deuxième coupleur optique montant *COM-B.*

Ainsi, la technique proposée permet donc d'adresser un groupe de clients via la fibre *A* et un groupe de clients via la fibre *B,* multipliant par deux le nombre de clients adressés avec un seul module émetteur-récepteur et sans modifications de l'infrastructure extérieure à ce module émetteur-récepteur ou à l'équipement réseau OLT. Par ailleurs, ce mode de réalisation permet de superviser de manière différenciée les deux fibres *A* et *B,* et donc notamment de pouvoir détecter de manière différenciée si des clients sont connectés sur la fibre *A* ou la fibre *B.*

On décrit maintenant un deuxième mode de réalisation, illustré en figures 2a à 2c selon plusieurs variantes, pour un module émetteur-récepteur embarquant plusieurs technologies PON. Pour ce faire, le module émetteur-récepteur comprend deux lasers générant respectivement un premier signal optique de première longueur d'onde *λ1D* pour un premier débit utile, par exemple un Gigabit, et un deuxième signal optique de deuxième longueur d'onde *λ2D* pour un deuxième débit utile, par exemple dix Gigabits. Ensuite, les deux signaux générés sont agrégés pour délivrer un signal optique portant les deux longueurs d'ondes *λ1D* et *λ2D*. C'est ce signal optique qui est ensuite séparé par le coupleur optique principal *CO1* ajouté, selon la présente technique, dans le module émetteur-récepteur, en deux signaux optiques descendants sensiblement de même puissance à transmettre respectivement dans les deux fibres optiques *A* et *B.*

De plus, selon cette technologie multi-PON, chacun des signaux optiques montants via les deux fibres optiques *A* et *B* portent également deux longueurs d'onde *λ1m* et *λ2m.* Ainsi, le coupleur optique principal *CO1* est apte à agréger les premier et deuxième signaux optiques de forte puissance (délivrés respectivement par les premier et deuxième coupleurs optiques montants *COM-A* et *COM-B*) en un signal optique montant présentant également la première longueur d'onde *λ1m* et la deuxième longueur d'onde *λ2m.*

Selon ce mode de réalisation illustré en figure 2a, la mesure de la puissance dans chacune des deux voies *A* et *B* est globale, i.e. indifférenciée en termes de longueur d'onde. Ainsi, la mesure de puissance pour le signal montant de la fibre *A* est assurée, comme pour le premier mode de réalisation, par une photodiode *PxA* délivrant une mesure de puissance associée au premier signal de puissance faible *M-A-low*(*λ1m,λ2*), lequel porte les deux longueurs d'onde *λ1m* et *λ2m.* De manière symétrique, la mesure de puissance pour le signal montant de la fibre *B* est assurée, comme pour le premier mode de réalisation, par une photodiode *PxB* délivrant une mesure de puissance associée au premier signal de puissance faible *M-B-low*(*λ1m,λ2*), lequel porte les deux longueurs d'onde *λ1m* et *λ2m.*

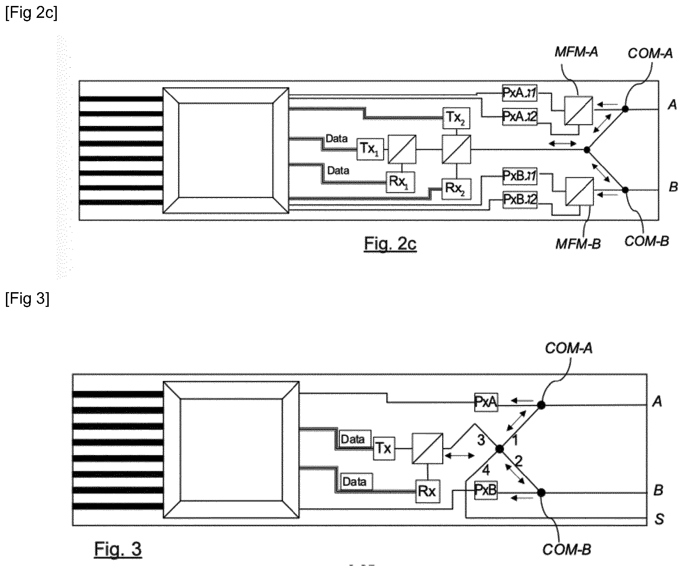

Selon une première et une deuxième variantes de ce deuxième mode de réalisation, illustrées en figures 2b et 2c, la mesure de la puissance dans chacune des deux voies *A* et *B* est dédiée à chacune des deux longueurs d'onde montantes, via la mise en œuvre d'au moins un premier module de filtrage optique montant *MFM-A* comprenant notamment deux photodiodes de mesure de la puissance et délivrant une mesure de puissance associée à chaque signal optique de puissance faible pour chaque première *λ1m* et deuxième longueur d'onde *λ2m.*

Selon la première variante illustrée en figure 2b, le premier module de filtrage optique montant *MFM-A* comprend un coupleur optique 1 vers 2 après la branche de prélèvement *COM-A,* et un filtre optique devant chaque photodiode *PxA,λ1* et *PxA,λ2* pour mesurer respectivement puissance d'un signal selon la longueur d'onde montante d'une technologie PON. Ainsi, le coupleur optique 1 vers 2 sépare le signal optique de puissance faible, délivré par le premier coupleur optique montant *COM-A* et présentant une première *λ1m* et une deuxième longueur d'onde *λ2m,* en deux signaux sensiblement de même puissance présentant chacun les deux longueurs d'onde, et, pour chacun de ces deux signaux séparés, un filtre optique délivre respectivement un signal à mesurer présentant la première longueur d'onde *λ1m* et un deuxième signal à mesurer présentant la deuxième longueur d'onde *λ2m.* Ces deux signaux à mesurer sont ensuite traités respectivement par deux photodiodes *PxA,λ1* et *PxA,λ2* délivrant respectivement une mesure de puissance associée au premier signal à mesurer de première longueur d'onde *λ1m* et au deuxième signal à mesurer de deuxième longueur d'onde *λ2m.* Comme illustré sur la figure 2b, un deuxième module de filtrage optique montant *MFM-B,* comprenant des éléments similaires, est également prévu pour le signal reçu de la fibre optique *B.*

Cette première variante de module de filtrage optique est simple et peu coûteuse à mettre en œuvre et permet une supervision différenciée pour chaque longueur d'onde reçue sur chaque fibre optique. De ce fait, selon cette première variante de réalisation, la mise en œuvre de la présente technique offre non seulement un doublement du nombre de clients adressés avec un seul module émetteur-récepteur, mais également un niveau de supervision adapté car différencié selon la longueur d'onde montante.

Selon la deuxième variante illustrée en figure 2c, le premier module de filtrage optique montant *MFM-A* comprend un multiplexeur, après la branche de prélèvement, pour séparer les longueurs d'onde montantes avant la mesure de puissance. Ainsi, le multiplexeur optique sépare le signal optique de puissance faible, délivré par le premier coupleur optique montant *COM-A* et présentant une première *λ1m* et une deuxième longueur d'onde *λ2m,* en un premier signal à mesurer présentant la première longueur d'onde *λ1m* et un deuxième signal à mesurer présentant la deuxième longueur d'onde *λ2m.* Ces deux signaux à mesurer sont ensuite traités respectivement par deux photodiodes *PxA,λ1* et *PxA,λ2* délivrant respectivement une mesure de puissance associée au premier signal à mesurer de première longueur d'onde *λ1m* et au deuxième signal à mesurer de deuxième longueur d'onde *λ2m.* Comme illustré sur la figure 2c, un deuxième module de filtrage optique montant *MFM-B,* comprenant des éléments similaires, est également prévu pour le signal reçu de la fibre optique B.

Cette deuxième variante de module de filtrage optique est simple à mettre en œuvre et permet une supervision différenciée pour chaque longueur d'onde reçue sur chaque fibre optique, en limitant les pertes optiques grâce à l'utilisation d'un multiplexeur à la place d'un coupleur associé à un filtre optique comme dans la première variante. De ce fait, selon cette deuxième variante de réalisation, la mise en œuvre de la présente technique offre également un doublement du nombre de clients adressés avec un seul module émetteur-récepteur et un niveau de supervision adapté car différencié selon la longueur d'onde montante.

On présente maintenant, en relation avec la figure 3, un troisième mode de réalisation permettant de fournir une troisième « branche » dans l'interface optique du module émetteur-récepteur, pour permettre notamment la mise en œuvre de diagnostic complémentaire, par réflectométrie (« Optical Time Domain Reflectometer » ou OTDR en anglais), ou de prélèvement des signaux montants pour une supervision externe.

En effet, en partant du principe qu'un coupleur optique, tel que celui ajouté selon les différents modes de réalisation de la présente technique, présente autant de perte optique pour une configuration 1 vers 2 (1 vers n) que 2 vers 2 (n vers n), l'ajout d'une quatrième entrée-sortie à ce coupleur optique, connectée à une entrée-sortie externe de supervision *S* du module émetteur-récepteur, n'a pas d'impact en termes de perte optique de l'ensemble du module émetteur-récepteur.

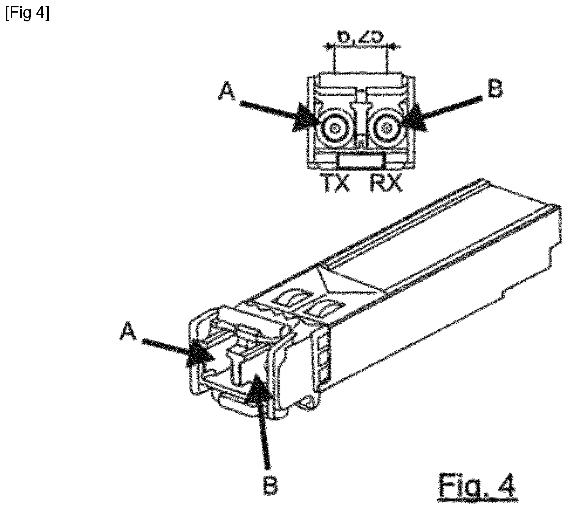

Ainsi, cette troisième entrée-sortie externe *S* (les première et deuxième entrées-sorties étant respectivement liées aux fibres optiques *A* et *B*) permet, d'une part, la mise en œuvre d'une technique de diagnostic de l'infrastructure fibre, en y connectant, à l'extérieur du module émetteur-récepteur, un équipement de métrologie pour faire de l'échométrie. Le principe, connu, consiste à envoyer une impulsion, laquelle, dans la mise en œuvre présente, est transmise dans chacune des fibres A et B via le coupleur optique principal *CO1.* Ensuite, toujours via le coupleur optique principal *CO1,* le signal en retour, i.e. l'écho de l'impulsion, est observé (notamment la puissance et le temps de retour) afin d'effectuer un diagnostic permettant notamment de détecter des points de coupure ou d'affaiblissement du signal sur l'infrastructure vers les groupes de clients. Le principal avantage de cette mise en œuvre réside dans le fait de ne pas avoir à déconnecter l'une ou l'autre des fibres en cours d'utilisation pour effectuer ce diagnostic. D'autre part, cette troisième entrée-sortie externe *S* permet la mise en œuvre d'une technique d'écoute du trafic montant via les fibres A et B, notamment quand le système global est en fonctionnement nominal, i.e. quand les clients sont connectés et qu'un trafic internet est observé. Enfin, comme décrit précédemment, les éléments optiques mettant en œuvre la présente technique présentent l'avantage d'être intégrés dans un boitier mécanique existant d'un module émetteur-récepteur standard, tout en fournissant deux interfaces optiques, par exemple de type réceptacle LC espacées de 6.25 mm comme schématisé sur la partie haute de la figure 4, illustrant les deux entrées-sorties A et B d'un tel module émetteur-récepteur. La partie basse de la figure 4 illustre quant à elle un exemple d'un module émetteur-récepteur en perspective.

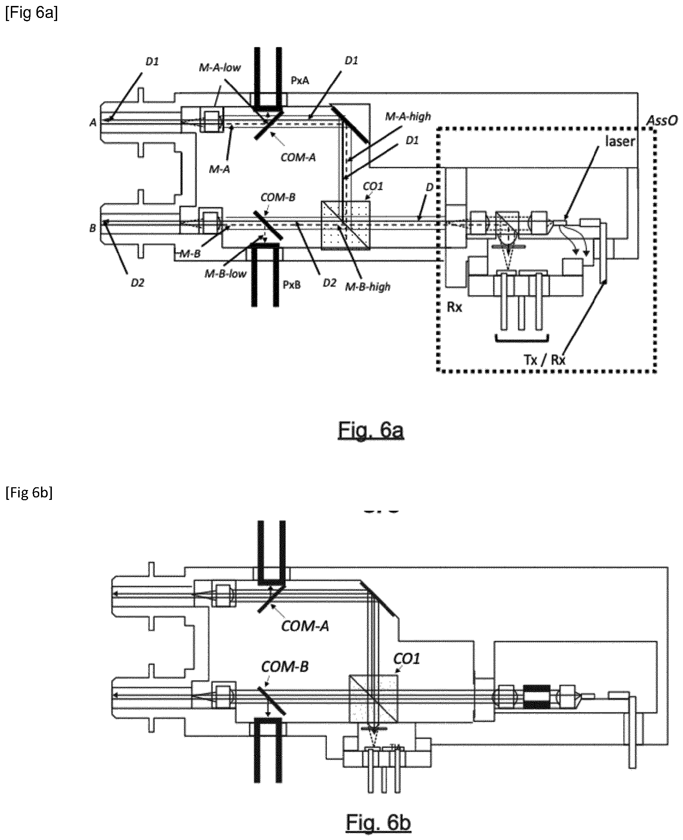

Pour ce faire, et comme illustré avec les figures 6a à 6f, les éléments optiques mis en œuvre dans la présente technique doivent être agencés de sorte à respecter des contraintes prédéterminées de dimensions du boitier mécanique dudit module émetteur-récepteur.

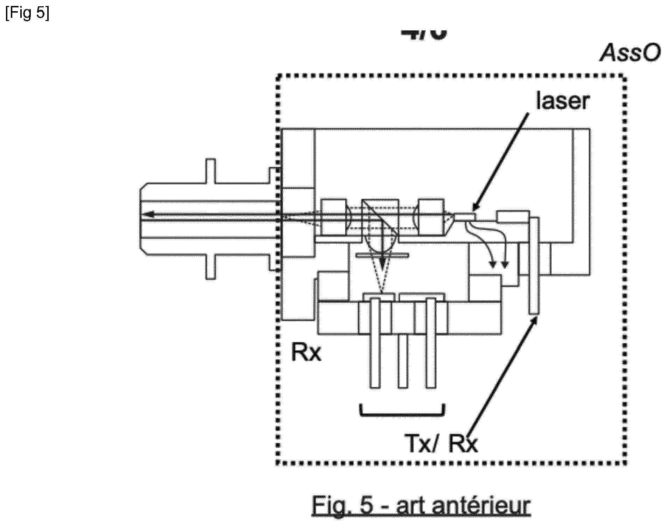

Tout d'abord, la figure 5 illustre un exemple d'assemblage optique *AssO* de type BOSA (pour « Bidirectional Optical Sub-Assembly » en anglais), selon l'art antérieur, utilisé pour réaliser un module émetteur-récepteur bidirectionnel selon la présente technique, et comprenant notamment un laser et un module de réception Rx, ainsi que des connecteurs Tx/Rx vers la partie électronique du module émetteur-récepteur. Cet assemblage optique « basique » est donc complété, selon les différents modes de réalisation de la présente technique décrits précédemment, pour fournir un module émetteur-récepteur optronique avec deux interfaces optiques bidirectionnelles et supervisées de manière différenciée.

Les figures 6a à 6f présentent différentes variantes d'agencement interne au module émetteur-récepteur optronique pour les différents composants/éléments optiques mettant en œuvre la présente technique et permettant de ne pas modifier le boitier mécanique du module émetteur-récepteur optronique lui-même, de sorte à pouvoir mettre en œuvre la présente technique dans un boitier standard et sans modification de l'équipement réseau OLT non plus.

Selon la figure 6a, les éléments de la présente technique sont donc illustrés sur la partie à gauche de l'assemblage optique *AssO* décrit ci-dessus, à savoir :
- un coupleur optique principal *CO1,*
- un premier coupleur optique montant *COM-A* et un deuxième coupleur optique montant *COM-B,*
- deux photodiodes *PxA* et *PxB.*

De plus, les signaux montants *M-A* et *M-B,* respectivement via les fibres optiques *A* et *B,* puis les signaux séparés *M-A-low* et *M-A-high, M-B-low* et *M-B-high,* par les coupleurs optiques montants *COM-A* et *COM-B,* sont illustrés en trais pointillés. Les signaux descendants, issus du laser (*D*), et du coupleur optique principal *CO1,* i.e. *D1* et *D2,* sont illustrés en trait gras.

Ce premier agencement permet de mettre en œuvre l'invention dans un boitier standard de module émetteur-récepteur.

Selon la variante illustrée en figure 6b, les parties optiques correspondant respectivement à la transmission et la réception sont séparées de sorte à ne pas nécessiter d'élément de filtrage devant le laser, permettant de limiter l'atténuation. En effet, le faisceau de signal émis par le laser est directement émis vers le coupleur optique principal car le signal optique reçu est dévié pour traitement avant d'arriver dans l'assemblage optique de base décrit ci-dessus, qui se trouve donc modifié selon cette variante. Un isolateur est prévu devant le laser afin d'empêcher qu'il ne reçoive les résidus de signal montant. Le reste des éléments mettant en œuvre l'invention, tels que décrits ci-dessus en relation avec la figure 6a, sont similaires et non décrits en détails à nouveau ici.

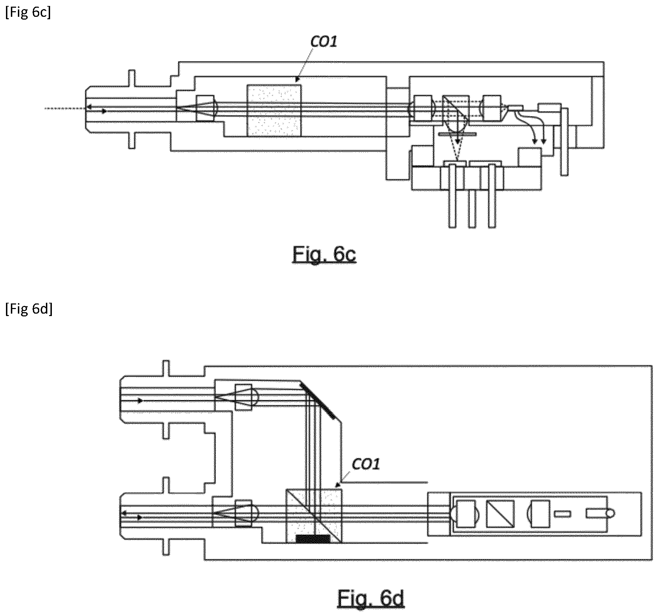

Les figures 6c et 6d (vue de coupe et vue du dessus) illustrent une autre variante, avec un assemblage dans deux plans perpendiculaires, permettant de gagner en compacité et en facilité d'intégration. Ainsi, les éléments mettant en œuvre la présente technique, et notamment le coupleur principal et les premier et deuxième coupleurs montants sont mis en œuvre dans un plan horizontal alors que les éléments permettant de séparer les signaux montants et descendants sont mis en œuvre dans un plan vertical.

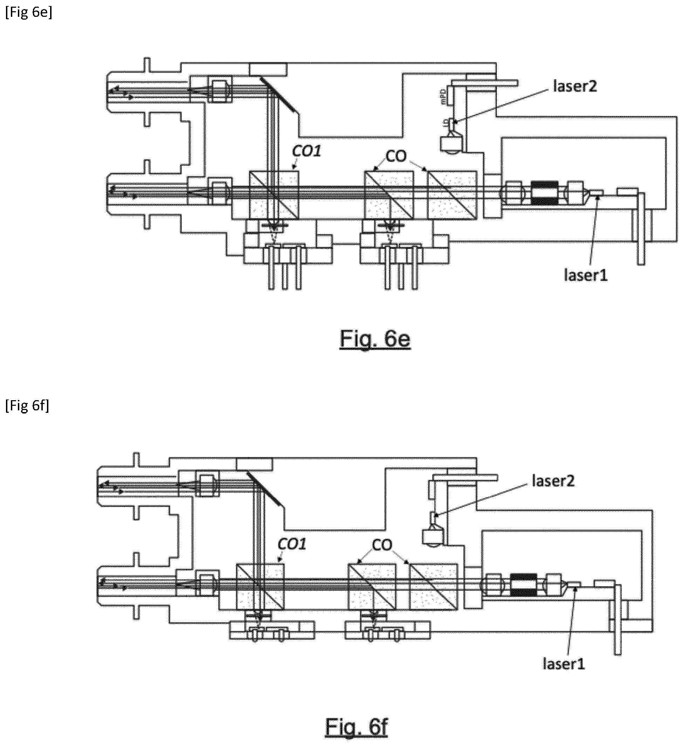

Les figures 6e et 6f illustrent encore une autre variante, adaptée à une technique multi-PON, telle que déjà décrite ci-dessus, dans laquelle deux lasers sont mis en œuvre, pour chacune des longueurs d'onde prévues.

La figure 6f correspond à la même mise en œuvre que la figure 6e, mais avec les connecteurs dirigés dans un plan perpendiculaire, de sorte à permettre un gain de place supplémentaire.

Il est à noter que, sur les figures 6c à 6f, les modules de filtrage optiques montants ne sont pas illustrés (et notamment les photodiodes) mais ils sont mis en œuvre comme pour les figures 6a et 6b et les modes de réalisation décrits précédemment.

## Revendications

1. Module émetteur-récepteur optronique apte à émettre au moins un signal optique descendant (*D*) respectivement dans au moins une première fibre optique (A) et une deuxième fibre optique (B) et à recevoir au moins un premier signal
optique montant (*M-A*) via au moins la dite première fibre optique et au moins un deuxième signal optique montant (M-B) via au moins ladite deuxième fibre optique (B), le module émetteur-récepteur optronique comprenant une interface optique
comprenant au moins un laser apte à générer ledit au moins un signal optique descendant (D) et :
- au moins un coupleur optique m vers n, avec m compris entre 1 et n, dit coupleur optique principal *(CO1),* apte à séparer ledit au moins un signal optique descendant (*D*) généré par le laser en n signaux optiques descendants (*D1, D2 ..., Dn*) sensiblement de même puissance à transmettre respectivement dans n fibres optiques comprenant ladite première fibre optique (A) et ladite deuxième fibre optique (B),
- au moins un premier coupleur optique montant *(COM-A)* apte à séparer ledit premier signal optique montant (*M-A*) reçu via ladite première fibre optique A en deux signaux optiques séparés selon un rapport prédéterminé de puissance de référence pour lesdits signaux optiques séparés, ledit premier coupleur optique montant (COM-A) délivrant un premier signal de puissance faible (*M-A-low*) et un premier signal de puissance forte (*M-A-high*),
- au moins une première photodiode de mesure de puissance (*PxA*) apte à délivrer une mesure de puissance associée au premier signal de puissance faible (*M-A-low*), ledit coupleur optique principal (*CO1*) étant apte à agréger le premier signal optique de forte puissance (*M-A-high*) et au moins un deuxième signal optique montant représentatif dudit deuxième signal optique (*M-B*) reçu via ladite deuxième fibre optique B, en un signal optique montant agrégé (*M-A-B*).

2. Module émetteur-récepteur optronique selon la revendication 1, où le coupleur optique principal (*CO1*) est un coupleur 1 vers 2 et où le module émetteur-récepteur optronique comprend également :
- un deuxième coupleur optique montant (*COM-B*) apte à séparer un signal optique montant (*M-B*) reçu via la deuxième fibre optique en deux signaux optiques séparés selon un rapport prédéterminé de puissance de référence pour lesdits signaux optiques séparés, ledit deuxième coupleur optique montant délivrant un deuxième signal de puissance faible (*M-B-low*) et un deuxième signal de puissance forte (*M-B-high*),
- une deuxième photodiode de mesure de puissance (*PxB*) délivrant une mesure de puissance associée au deuxième signal de puissance faible (*M-B-low*),
et où ledit coupleur optique principal est apte à agréger le premier signal optique de forte puissance (*M-A-high*) et le deuxième signal optique de forte puissance (*M-B-high*), en un signal optique montant (*M-A-B*).

3. Module émetteur-récepteur optronique selon la revendication 1 ou la revendication 2, comprenant deux lasers apte à générer respectivement un premier signal optique présentant une première longueur d'onde (*λ1D*) pour un premier débit utile et un deuxième signal optique présentant une deuxième longueur d'onde (*λ2D*) pour un deuxième débit utile et où ledit coupleur optique principal (*CO1*) est apte :
- à séparer un signal optique correspondant à une combinaison des premier et deuxième signaux optiques générés par les deux lasers en n signaux optiques descendants sensiblement de même puissance à transmettre respectivement dans n fibres optiques, et
- à agréger n premiers et/ou deuxièmes signaux optiques de forte puissance correspondant chacun à une combinaison de deux signaux optiques reçus présentant respectivement une première (*λ1m*) et une deuxième longueur d'onde (*λ2m*), en un signal optique montant présentant une première (*λ1m*) et une deuxième longueur d'onde (*λ2m*),
et le module émetteur-récepteur optronique comprend au moins un premier module de filtrage optique montant (*MFM-A*) apte à délivrer une mesure de puissance associée à chaque signal optique de puissance faible pour chaque première (*λ1m*) et deuxième longueur d'onde (*λ2m*).

4. Module émetteur-récepteur optronique selon la revendication 3, où ledit premier module de filtrage montant (*MFM-A*) comprend :
- un coupleur optique apte à séparer le signal optique de puissance faible présentant une première (*λ1m*) et une deuxième longueur d'onde (*λ2m*) délivré par le premier coupleur optique montant (*COM-A*) en deux signaux sensiblement de même puissance présentant chacun une première (*λ1m*) et une deuxième longueur d'onde (*λ2m*),
- deux filtres optiques (*FAλ1, FAλ2)* délivrant, à partir respectivement des deux signaux sensiblement de même puissance présentant chacun une première (*λ1m*) et une deuxième longueur d'onde (*λ2m*), respectivement un premier signal à mesurer présentant la première longueur d'onde et un deuxième signal à mesurer présentant la deuxième longueur d'onde, et
- deux photodiodes (*PxA,λ1, PxA,λ2*) délivrant respectivement une mesure de puissance associée au premier signal à mesurer et au deuxième signal à mesurer délivrés par les filtres optiques.

5. Module émetteur-récepteur optronique selon la revendication 3, où ledit premier module de filtrage montant (*MFM-A*) comprend :
- un multiplexeur optique apte à séparer le signal optique de puissance faible présentant une première (*λ1m*) et une deuxième longueur d'onde (*λ2m*) délivré par le premier coupleur optique montant en un premier signal à mesurer présentant la première longueur d'onde et un deuxième signal à mesurer présentant la deuxième longueur d'onde, et
- deux photodiodes apte à délivrer respectivement une mesure de puissance associée au premier signal à mesurer et au deuxième signal à mesurer délivrés par les filtres optiques.

6. Module émetteur-récepteur optronique selon la revendication 3, comprenant un deuxième module de filtrage optique montant (*MFM-B*) apte à délivrer une mesure de puissance associée à chaque signal optique de puissance faible pour chaque première (*λ1m*) et deuxième longueur d'onde (*λ2m*).

7. Module émetteur-récepteur optronique selon la revendication 1, où ledit coupleur optique principal (*CO1*) est un coupleur 2 vers 2 présentant une première entrée-sortie pour l'émission et la réception des signaux optiques de la première fibre, une deuxième entrée-sortie pour l'émission et la réception des signaux optiques de la deuxième fibre, une troisième entrée-sortie pour l'obtention dudit au moins un signal optique descendant (*D*) généré par le laser et la délivrance du signal optique montant agrégé *(M-A-B)* et une quatrième entrée-sortie connectée à une entrée-sortie externe de supervision (*S*) du module émetteur-récepteur optronique.

8. Module émetteur-récepteur optronique selon la revendication 1, où ledit coupleur optique principal (*CO1*), ledit au moins un premier coupleur optique montant *(COM-A)* et ladite au moins une première photodiode de mesure de puissance (*PxA*) sont agencés dans ledit module émetteur-récepteur de sorte à respecter les contraintes prédéterminées de dimensions d'un boitier mécanique dudit module émetteur-récepteur.

9. Module émetteur-récepteur optronique selon les revendications 1 à 8, où au moins une mesure de puissance délivrée par au moins une photodiode de mesure de puissance est transmise au terminal de ligne optique dans un paramètre de diagnostic.

## Patentansprüche

1. Optronisches Sende-Empfangsmodul, das dazu geeignet ist, mindestens ein optisches Abwärtssignal (*D*) jeweils in mindestens eine erste Glasfaser (A) und eine zweite Glasfaser (B) zu senden und mindestens ein erstes optisches Aufwärtssignal (*M-A*) über mindestens die erste Glasfaser und mindestens ein zweites optisches Aufwärtssignal (M-B) über mindestens die zweite Glasfaser (B) zu empfangen, wobei das optronische Sende-Empfangsmodul eine optische Schnittstelle mit mindestens einem Laser aufweist, der das mindestens eine optische Abwärtssignal (*D*) erzeugen kann, und:
- mindestens einen optischen Koppler m nach n, wobei m zwischen 1 und n liegt, ein sogenannter optischer Hauptkoppler (*CO1*), der dazu geeignet ist, das mindestens eine vom Laser erzeugte optische Abwärtssignal (*D*) in n optische Abwärtssignale (*D1, D2..., Dn*) mit im Wesentlichen gleicher Leistung zu trennen, die jeweils in n Glasfasern, einschließlich der ersten Glasfaser (A) und der zweiten Glasfaser (B), übertragen werden sollen,
- mindestens einen ersten optischen Aufwärtskoppler (*COM-A*), der dazu geeignet ist, das über die erste Glasfaser A empfangene erste optische Aufwärtssignal (*M-A*) in zwei getrennte optische Signale mit einem vorbestimmten Referenzleistungsverhältnis für die getrennten optischen Signale zu trennen, wobei der erste optische Aufwärtskoppler (COM-A) ein erstes Signal mit geringer Leistung (*M-A-low*) und ein erstes Signal mit hoher Leistung (*M-A-high*) liefert,
- mindestens eine erste Fotodiode zur Leistungsmessung (*PxA*), die dazu geeignet ist, eine Leistungsmessung in Verbindung mit dem ersten Signal mit geringer Leistung (*M-A-low*) zu liefern,
wobei der optische Hauptkoppler (*CO1*) dazu geeignet ist, das erste optische Signal mit hoher Leistung (*M-A-high*) und mindestens ein zweites optisches Aufwärtssignal, das für das über die zweite Glasfaser B empfangene zweite optische Signal (*M-B*) repräsentativ ist, zu einem aggregierten optischen Aufwärtssignal (*M-A-B*) zu aggregieren.

2. Optronisches Sende-Empfangsmodul nach Anspruch 1, wobei der optische Hauptkoppler (*CO1*) ein 1-zu-2-Koppler ist und wobei das optronische Sende-Empfangsmodul darüber hinaus Folgendes aufweist:
- einen zweiten optischen Aufwärtskoppler (*COM-B*), der dazu geeignet ist, ein über die zweite Glasfaser empfangenes erstes optisches Aufwärtssignal (*M-B*) in zwei getrennte optische Signale mit einem vorbestimmten Referenzleistungsverhältnis für die getrennten optischen Signale zu trennen, wobei der zweite optische Aufwärtskoppler ein zweites Signal mit geringer Leistung (*M-B-low*) und ein zweites Signal mit hoher Leistung (*M-B-high*) liefert,
- eine zweite Fotodiode zur Leistungsmessung (*PxB*), die eine Leistungsmessung in Verbindung mit dem zweiten Signal mit geringer Leistung (*M-B-low*) liefert,
und wobei der optische Hauptkoppler dazu geeignet ist, das erste optische Hochleistungssignal (*M-A-high*) und das zweite optische Hochleistungssignal (*M-B-high*) zu einem optischen Aufwärtssignal (*M-A-B*) zu aggregieren.

3. Optronisches Sende-Empfangsmodul nach Anspruch 1 oder Anspruch 2 mit zwei Lasern, die dazu geeignet sind, jeweils ein erstes optisches Signal mit einer ersten Wellenlänge (*λ1D*) für eine erste Nutzrate und ein zweites optisches Signal mit einer zweiten Wellenlänge (*λ2D*) für eine zweite Nutzrate zu erzeugen, und wobei der optische Hauptkoppler (*CO1*) dazu geeignet ist:
- ein optisches Signal, das einer Kombination der ersten und der zweiten optischen Signale entspricht, die von den beiden Lasern erzeugt werden, in n absteigende optische Signale mit im Wesentlichen gleicher Leistung zu trennen, die jeweils in n Glasfasern übertragen werden sollen, und
- n erste und/oder zweite optische Signale hoher Leistung, die jeweils einer Kombination aus zwei empfangenen optischen Signalen entsprechen, die jeweils einer ersten (*λ1m*) bzw. einer zweiten Wellenlänge (*λ2m*) entsprechen, zu einem optischen Aufwärtssignal mit einer ersten (*λ1m*) und einer zweiten Wellenlänge (*λ2m*) zu aggregieren,
Wobei das optronische Sende-Empfangsmodul mindestens ein erstes optisches Aufwärts-Filtermodul (*MFM-A*) aufweist, das dazu geeignet ist, für jede erste (*λ1m*) und zweite Wellenlänge (*λ2m*) eine jedem optischen Signal mit geringer Leistung zugeordnete Leistungsmessung zu liefern.

4. Optronisches Sende-Empfangsmodul nach Anspruch 3, wobei das erste Aufwärts-Filtermodul(*MFM-A*) Folgendes aufweist:
- einen optischen Koppler, der dazu geeignet ist, das optische Signal mit geringer Leistung, das eine erste (*λ1m*) und eine zweite Wellenlänge (*λ2m*) aufweist und vom ersten optischen Aufwärtskoppler (*COM-A*) geliefert wird, in zwei Signale mit im Wesentlichen gleicher Leistung zu trennen, die jeweils eine erste (*λ1m*) und eine zweite Wellenlänge (*λ2m*) aufweisen,
- zwei optische Filter *(FAA1, FAA2),* die ausgehend von den beiden Signalen mit im Wesentlichen gleicher Leistung, die jeweils eine erste (*λ1m*) und eine zweite Wellenlänge (*λ2m*) aufweisen, jeweils ein erstes zu messendes Signal mit der ersten Wellenlänge und ein zweites zu messendes Signal mit der zweiten Wellenlänge liefern, und
- zwei Fotodioden *(PxA, λ1, PxA*, *λ2*), die jeweils einen Leistungsmesswert liefern, der dem ersten zu messenden Signal und dem zweiten zu messenden Signal zugeordnet ist, die von den optischen Filtern geliefert werden.

5. Optronisches Sende-Empfangsmodul nach Anspruch 3, wobei das erste Aufwärts-Filtermodul(*MFM-A*) Folgendes aufweist:
- einen optischen Multiplexer, der dazu geeignet ist, das optische Signal mit geringer Leistung, das eine erste (*λ1m*) und eine zweite Wellenlänge (*λ2m*) aufweist und vom ersten optischen Aufwärtskoppler geliefert wird, in ein erstes zu messendes Signal mit der ersten Wellenlänge und ein zweites zu messendes Signal mit der zweiten Wellenlänge zu trennen, und
- zwei Fotodioden, die dazu geeignet sind, jeweils einen Leistungsmesswert zu liefern, der dem ersten zu messenden Signal und dem zweiten zu messenden Signal zugeordnet ist, die von den optischen Filtern geliefert werden.

6. Optronisches Sende-Empfangsmodul nach Anspruch 3 mit einem zweiten optisches Aufwärts-Filtermodul (*MFM-B*), das dazu geeignet ist, für jede erste (*λ1m*) und zweite Wellenlänge (*λ2m*) eine jedem optischen Signal mit geringer Leistung zugeordnete Leistungsmessung zu liefern.

7. Optronisches Sende-Empfangsmodul nach Anspruch 1, wobei der optische Hauptkoppler (*CO1*) ein 2-zu-2-Koppler ist, der einen ersten Ein-/Ausgang zum Senden und Empfangen der optischen Signale der ersten Glasfaser, einen zweiten Ein-/Ausgang zum Senden und Empfangen der optischen Signale der zweiten Glasfaser, einen dritten Ein-/Ausgang zum Erhalten des mindestens einen vom Laser erzeugten optischen Abwärtssignals (*D*) und zum Ausgeben des aggregierten optischen Aufwärtssignals (*M-A-B*) und einen vierten Ein-/Ausgang aufweist, der mit einem externen Ein-/Ausgang zur Überwachung (S) des optronischen Sende-Empfangsmoduls verbunden ist.

8. Optronisches Sende-Empfangsmodul nach Anspruch 1, wobei der optische Hauptkoppler (*CO1*), der mindestens eine erste optische Aufwärtskoppler (*COM-A*) und die mindestens eine erste Fotodiode zur Leistungsmessung (*PxA*) in dem Sende-Empfangsmodul so angeordnet sind, dass sie die vorgegebenen Abmessungsbeschränkungen eines mechanischen Gehäuses des Sende-Empfangsmoduls einhalten.

9. Optronisches Sende-Empfangsmodul nach den Ansprüchen 1 bis 8, wobei mindestens eine von mindestens einer Fotodiode zur Leistungsmessung gelieferte Leistungsmessung in einem Diagnoseparameter an das Endgerät der optischen Leitung übertragen wird.

## Claims

1. Optronic transmitter-receiver module capable of transmitting at least one downlink optical signal (*D*) in at least a first optical fibre (A) and a second optical fibre (B), respectively, and of receiving at least a first uplink optical signal (*M-A*) via at least said first optical fibre and at least a second uplink optical signal (M-B) via at least said second optical fibre (B), the optronic transmitter-receiver module comprising an optical interface comprising at least one laser capable of generating said at least one downlink optical signal (*D*) and:
- at least one m-to-n optical coupler, where m is between 1 and n, referred to as the main optical coupler (*CO1*), capable of separating said at least one downlink optical signal (*D*) generated by the laser into n downlink optical signals (*D1, D2..., Dn*) of substantially the same power to be transmitted in n optical fibres, respectively, comprising said first optical fibre (A) and said second optical fibre (B),
- at least a first uplink optical coupler (*COM-A*) capable of separating said first uplink optical signal (*M-A*) received via said first optical fibre A into two separate optical signals according to a predetermined reference power ratio for said separate optical signals, said first uplink optical coupler (COM-A) delivering a first low-power signal (*M-A-low*) and a first high-power signal (*M-A-high*),
- at least a first power measurement photodiode (*PxA*) capable of delivering a power measurement associated with the first low-power signal (*M-A-low*),
said main optical coupler (*CO1*) being capable of aggregating the first high-power optical signal (M-A-*high)* and at least a second uplink optical signal representative of said second optical signal (*M-B*) received via said second optical fibre B, into an aggregated uplink optical signal (*M-A-B*).

2. Optronic transmitter-receiver module according to Claim 1, wherein the main optical coupler (*CO1*) is a 1-to-2 coupler and wherein the optronic transmitter-receiver module also comprises:
- a second uplink optical coupler (*COM-B*) capable of separating an uplink optical signal (*M-B*) received via the second optical fibre into two separate optical signals according to a predetermined reference power ratio for said separate optical signals, said second uplink optical coupler delivering a second low-power signal (*M-B-low*) and a second high-power signal (*M-B-high*),
- a second power measurement photodiode (*PxB*) delivering a power measurement associated with the second low-power signal (*M-B-low*),
and wherein said main optical coupler is capable of aggregating the first high-power optical signal (*M-A-high*) and the second high-power optical signal (*M-B-high*), into an uplink optical signal (*M-A-B*).

3. Optronic transmitter-receiver module according to Claim 1 or Claim 2, comprising two lasers capable of generating a first optical signal having a first wavelength (*λ1D*) for a first useful output and a second optical signal having a second wavelength (*λ2d*) for a second useful output, respectively, and wherein said main optical coupler (*CO1*) is capable:
- of separating an optical signal corresponding to a combination of the first and second optical signals generated by the two lasers into n downlink optical signals of substantially the same power to be transmitted in n optical fibres, respectively, and
- of aggregating n first and/or second high-power optical signals each corresponding to a combination of two received optical signals having a first wavelength (*λ1m*) and a second wavelength (*λ2m*), respectively, into an uplink optical signal having a first wavelength (*λ1m*) and a second wavelength (*λ2m*),
and the optronic transmitter-receiver module comprises at least a first uplink optical filtering module (*MFM-A*) capable of delivering a power measurement associated with each low-power optical signal for each first wavelength (*λ1m*) and second wavelength (*λ2m*).

4. Optronic transmitter-receiver module according to Claim 3, wherein said first uplink filtering module (*MFM-A*) comprises:
- an optical coupler capable of separating the low-power optical signal having a first wavelength (*λ1m*) and a second wavelength (*λ2m*) delivered by the first uplink optical coupler (*COM-A*) into two signals of substantially the same power each having a first wavelength (*λ1m*) and a second wavelength (*λ2m*),
- two optical filters (*FAλ1, FAA2*) delivering, in response to the two signals of substantially the same power each having a first wavelength (*λ1m*) and a second wavelength (*λ2m*), respectively, a first signal to be measured having the first wavelength and a second signal to be measured having the second wavelength, respectively, and
- two photodiodes (*PxA, λ1, PxA*, *λ2*) delivering a power measurement associated with the first signal to be measured and with the second signal to be measured, respectively, delivered by the optical filters.

5. Optronic transmitter-receiver module according to Claim 3, wherein said first uplink filtering module (*MFM-A*) comprises:
- an optical multiplexer capable of separating the low-power optical signal having a first wavelength (*λ1m*) and a second wavelength (*λ2m*) delivered by the first uplink optical coupler into a first signal to be measured having the first wavelength and a second signal to be measured having the second wavelength, and
- two photodiodes capable of delivering a power measurement associated with the first signal to be measured and with the second signal to be measured, respectively, delivered by the optical filters.

6. Optronic transmitter-receiver module according to Claim 3, comprising a second uplink optical filtering module (*MFM-B*) capable of delivering a power measurement associated with each low-power optical signal for each first wavelength (*λ1m*) and second wavelength (*λ2m*).

7. Optronic transmitter-receiver module according to Claim 1, wherein said main optical coupler (*CO1*) is a 2-to-2 coupler having a first input-output for transmitting and receiving the optical signals of the first fibre, a second input-output for transmitting and receiving the optical signals of the second fibre, a third input-output for obtaining said at least one downlink optical signal (*D*) generated by the laser and delivering the aggregated uplink optical signal (*M-A-B*), and a fourth input-output connected to an external supervisory input-output (S) of the optronic transmitter-receiver module.

8. Optronic transmitter-receiver module according to Claim 1, wherein said main optical coupler (*CO1*), said at least one first uplink optical coupler (*COM-A*) and said at least one first power measurement photodiode (*PxA*) are arranged in said transmitter-receiver module so as to comply with the predetermined dimensional constraints of a mechanical housing of said transmitter-receiver module.

9. Optronic transmitter-receiver module according to Claims 1 to 8, wherein at least one power measurement delivered by at least one power measurement photodiode is transmitted to the optical line terminal in a diagnostic parameter.
